# FASCICULE DE BREVET EUROPEEN

(11) **EP 0 914 188 B1**
(45) Date de publication et mention de la délivrance du brevet: **23.01.2002**
(21) Numéro de dépôt: 98921546.2
(22) Date de dépôt: 16.04.1998
(51) Int. Cl.: B01D 46/52, B01D 29/01

(54) **FILTRE RESISTANT A HAUTE TEMPERATURE, NOTAMMENT POUR INSTALLATION DE PEINTURE**
HOCHTEMPERATURFILTER, INSBESONDERE FÜR EINE LACKIERANLAGE
FILTER WITH HIGH TEMPERATURE STRENGTH, IN PARTICULAR FOR PAINT INSTALLATION

(30) Priorité: 16.04.1997 FR 9704686
(43) Date de publication de la demande: 12.05.1999
(73) Titulaire: Camfil S.A., 92257 La Garenne Colombes Cedex (FR)
(72) Inventeur: BERTIN, Daniel, Christian, Louis, F-92250 La Garenne Colombes (FR)
(74) Mandataire: Colas, Jean-Pierre
(86) Numéro de dépôt international: FR9800767
(87) Numéro de publication internationale: WO9846330

(56) Documents cités:
- EP-A- 0 329 544
- EP-A- 0 423 435
- FR-A- 2 738 164
- GB-A- 2 223 423

## Description

La présente invention est relative à la technique du filtrage de fluides gazeux tel que l'air et elle concerne plus particulièrement un filtre à air capable de résister à des températures élevées.

Des filtres de ce type sont notamment utilisés dans l'industrie automobile, où il est nécessaire de filtrer l'air chaud soufflé dans les tunnels (étuves) pour le séchage de peinture de carrosserie. Dans de telles installations peut régner une température pouvant aller jusqu'à 250°C.

Un filtre de la technique antérieure comporte en général un corps rigide métallique, appelé par la suite cadre, sur lequel est collé un joint et dans lequel est enchâssé un ensemble de filtrage composé par exemple de papier de filtrage plié en accordéon, à micropores éventuellement, qui peut être maintenu par un dispositif de support lui évitant de céder sous l'action de la différence des pressions de part et d'autre du dispositif. Un tel filtre est placé en général devant une ouverture de la paroi d'une enceinte dans laquelle l'atmosphère doit présenter un certain degré de pureté. Cependant, par exemple dans l'application envisagée ci-dessus, le filtre doit satisfaire une double exigence c'est-à-dire résister à des températures relativement élevées et pouvoir fréquemment être nettoyé ce qui exige notamment le démontage du joint.

Parmi les matériaux actuellement disponibles pour la réalisation du joint, on en connaît certains qui résistent aux températures élevées impliquées dans les applications visées par l'invention.

Ainsi, il est connu d'utiliser un joint en silicone. Cependant celui-ci, bien qu'étant apte à tenir à de hautes températures, ne saurait convenir, pour les procédés de peinture mis en oeuvre dans l'industrie automobile, car le silicone peut provoquer une détérioration de la qualité des couches de peinture apportées sur les carrosseries.

Par ailleurs, le joint en un matériau dit "Viton" (marque déposée) ne se délite pas étant capable de tenir à haute température mais il est onéreux et n'est pas suffisamment souple, la souplesse étant une des exigences requises pour les caractéristiques du joint pour qu'il puisse absorber d'éventuelles tolérances au cours du montage du filtre sur la structure de confinement de l'enceinte à filtrer.

On pourrait également utiliser un joint en Téflon (nom déposé). Mais ce type de joint présente l'inconvénient de manquer de souplesse à l'écrasement, et d'être onéreux.

Les différents essais et expériences faits à cet égard par la Demanderesse ont montré qu'un joint en tresse de verre offre l'avantage de résister aux températures envisagées et d'être compatibles avec les procédés de peinture évoqués ci-dessus.

Or, on a l'habitude de fixer un tel joint en tresse de verre à la structure du filtre à l'aide d'une colle polymérisable comme la colle époxy. Cependant, une telle colle présente également des difficultés à haute température, car la colle durcie risque de devenir friable par cuisson et ainsi de se déliter au cours de l'utilisation. Par ailleurs, lorsque pour le nettoyage du filtre il faut le démonter, le joint n'étant plus maintenu par la colle tombe et peut s'abîmer et donc doit être recollé avant remontage du filtre, ce qui entraîne son nettoyage pour le débarasser de la colle de surface sur laquelle le joint était précédemment collé.

L'invention a pour but de fournir un filtre conservant toutes ses propriétés de filtrage, notamment à haute température, et permettant un nettoyage commode éventuellement avec conservation du joint employé précédemment.

L'invention a donc pour objet un filtre présentant les caractéristiques telles que définies dans la revendication 1.

Grâce à ces caractéristiques, le joint du filtre est maintenu en place sur l'une des faces frontales du cadre, sans colle par des moyens de fixation qui le tiennent mécaniquement du fait de leur forme particulière. Le démontage du filtre pour le nettoyage de l'installation se trouve ainsi grandement facilité.

On connaît, par le document GB 2 223 423, une cartouche pour masque à gaz, dans lequel un corps de filtre est moulé dans un joint qui est tenu mécaniquement par certaines parties du boîtier de la cartouche. Cependant, le filtre de cette cartouche n'appartient pas à la catégorie de filtres selon la présente invention. En effet, le joint en question du document antérieur se trouve à l'intérieur de la cartouche qui, elle, est fermée par un couvercle serti. Ce joint ne peut donc faire étanchéité sur la paroi d'une enceinte sur laquelle le filtre doit être monté et, de plus, le joint n'est pas démontable. Enfin, ce filtre ne peut pas résister à des température élevées du fait de la matière dont est fait le joint.

D'autres caractéristiques avantageuses de l'invention sont définies dans les sous-revendications.

D'autres caractéristiques et avantages de l'invention apparaîtront au cours de la description qui va suivre, donnée uniquement à titre d'exemple et faite en se référant aux dessins annexés sur lesquels :
- la figure 1 montre par une vue en plan, la face frontale du filtre selon l'invention, présentant le joint; et
- la figure 2 est une vue en coupe partielle, à plus grande échelle et prise selon la ligne II-II de la figure 1, du filtre selon l'invention.

Suivant le mode de réalisation représenté, le filtre comprend un cadre 1, de préférence de forme générale carrée ou rectangulaire, destiné à être fixé devant une ouverture d'une enceinte dans laquelle l'atmosphère doit présenter une certaine pureté. Le cadre est fixé devant l'ouverture par des moyens mécaniques (non représentés) dans une position dans laquelle un joint 4 est comprimé contre le bord de cette ouverture afin de créer l'étanchéité nécessaire.

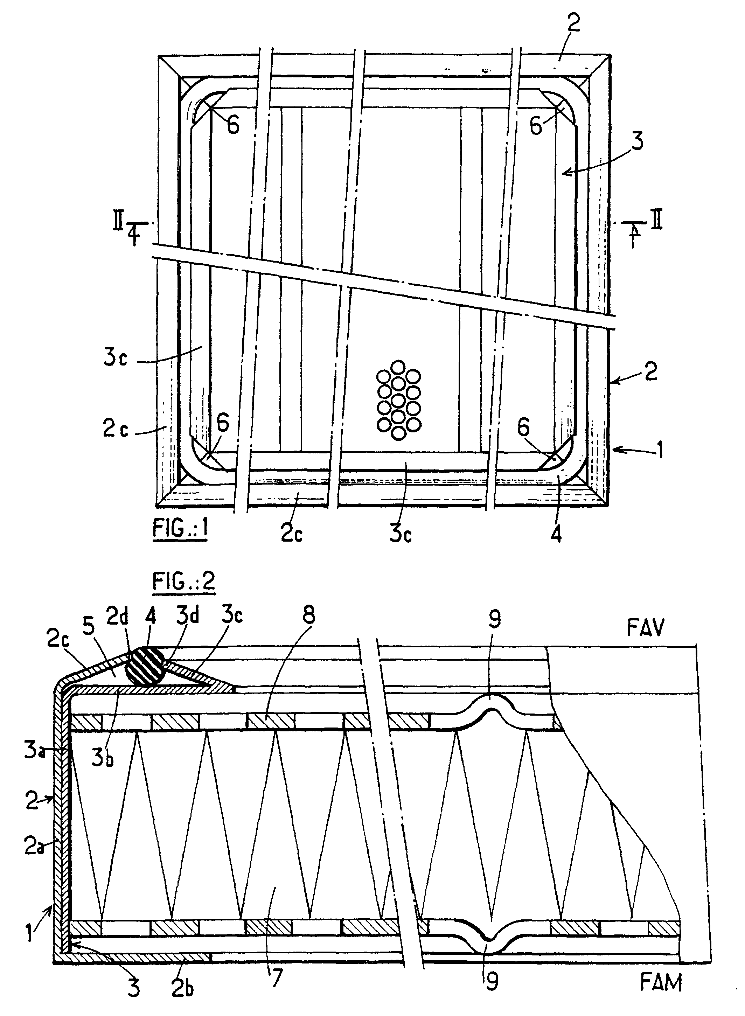

Dans l'exemple de réalisation préféré représenté au dessin, le cadre 1 comprend deux profilés 2 et 3 à section en forme de L faisant le tour du filtre, leur assemblage faisant apparaître une concavité vers l'intérieur. Les ailes 2a, 3a des profilés correspondant à la grande branche de leur L sont accolées l'une à l'autre pour former les faces latérales du cadre. Les ailes 2b, 3b des profilés formant la petite branche du L s'étendent respectivement dans les plans des faces amont et aval du filtre, désignées sur la figure 2 par FAM et FAV respectivement. Les deux profilés peuvent être assemblés de toute manière appropriée, par exemple par soudage par points.

A la face FAV, ce profilé 2 présente en outre une lèvre 2c s'étendant vers l'intérieur et qui est relevée, par pliage par exemple, hors du plan de cette face en étant disposée obliquement.

Le profilé 3 présente, quant à lui, et également à la face FAV une lèvre 3c, retournée et relevée obliquement de préférence par pliage tout en s'étendant vers l'extérieur à partir du bord libre de l'aile 3b.

Les deux lèvres 2c et 3c sont ainsi antagonistes et délimitent ensemble un logement 5 en forme de rainure pour un joint 4. Ce logement 5 court tout autour de la face aval FAV du filtre, à l'exception des angles où le joint 4 reste libre, comme on le voit en 6 sur la figure 1.

Les bords libres 2d et 3d des lèvres 2c et 3c sont écartés l'un de l'autre d'une distance qui est inférieure à une dimension transversale du joint. Dans le cas représenté où le joint est de section circulaire, cette dimension est le diamètre de sa section. Toutefois, certains joints, notamment ceux réalisés en tresse de verre comme le joint de l'invention, peuvent avoir une section plus ou moins ellipsoide ou ovoide, cas auquel ladite dimension sera le grand axe de cette section.

Le filtre comporte un corps de filtre 7 qui peut être réalisé de toute manière appropriée pour l'application envisagée. Par exemple, il peut être formé par une nappe de matériau de filtrage pliée en accordéon et mécaniquement tenue par des fils, comme cela est bien connu dans la technique.

Chaque face du corps de filtre 7 est recouverte d'une grille de protection 8, réalisée par exemple en tôle perforée et tenue entre le corps 7 et l'une ou l'autre des ailes 2b et 3b du cadre 1 sur toute sa périphérie. Des dépressions 9 ménagées sur les bords de ces tôles permettent de les maintenir écartées du corps de filtre 7.

Bien entendu, l'invention n'est pas limitée au mode de réalisation décrit et représenté qui n'a été donné qu'à titre d'exemple. C'est ainsi que les lèvres 2c et 3c, au lieu d'être réalisées par pliage des profilés 2 et 3, pourraient être réalisées séparément et rapportées par exemple par soudage au cadre 1. Par ailleurs, le cadre 1 peut être réalisé d'une façon différente par exemple à partir d'un seul profilé, l'une des lèvres étant alors rapportée sur le cadre par exemple par soudage.

## Revendications

1. Filtre à gaz, notamment filtre à air, capable de résister à des températures pouvant aller jusqu'à 250°C, comprenant un cadre (1), un corps de filtre (7) enchâssé dans ledit cadre (1) et un joint (4) réalisé en tresse de verre et prévu à l'extérieur sur l'une des faces frontales du cadre par l'intermédiaire de moyens de fixation, **caractérisé en ce que** lesdits moyens de fixation comprennent des parties de forme venues de matière avec le cadre (1) ou fixées à ce cadre, lesdites parties de forme comprenant deux lèvres antagonistes (2c, 3c) s'étendant parallèlement l'un à l'autre le long des côtés du cadre (1) et attachés à celui-ci, et **en ce que** les bords libres (2d et 3d) de ces lèvres sont espacés l'un de l'autre d'une distance inférieure à une dimension de la section du joint (4).

2. Filtre suivant la revendication 1, **caractérisé en ce que** ledit cadre (1) est réalisé à partir d'au moins un profilé (2, 3) délimitant une concavité tournée vers l'intérieur pour enchâsser ledit corps de filtre (7) et **en ce qu'**au moins l'une desdites lèvres (2c, 3c) est obtenue par pliage d'une aile (2a, 3b) de ce profilé (2, 3).

3. Filtre suivant la revendication 2, **caractérisé en ce que** ledit cadre (1) est réalisé à partir de deux profilés (2, 3) à section en forme de L, les ailes (2a, 3a) des profilés correspondant à la grande branche de leur section étant accolées et leur aile (2b, 3b) correspondant à la petite branche de leur section s'étendant respectivement dans le plan des faces frontales du filtre, lesdites lèvres (2c, 3c) étant formées l'une par un pliage d'une grande aile (2c) de l'un (2) des profilés et l'autre (3c) par un pliage en retour de la petite aile (3b) de l'autre profilé (3).

## Patentansprüche

1. Gas-, insbesondere Luftfilter, welcher in der Lage ist, Temperaturen zu widerstehen, die bis 250°C gehen können und einen Rahmen (1), einen in den besagten Rahmen eingetriebene Filterkörper (7) und eine aus einem Glasgeflecht hergestellte und aussen auf einer der Vorderseiten des Rahmens mit Hilfe von Befestigungsmitteln vorgesehene Dichtung (4) aufweist, **dadurch gekennzeichnet, dass** die besagten Befestigungsmittel Formteile aufweisen, welche aus der Materie des Rahmens (1) kommen oder an diesem Rahmen befestigt sind, wobei die besagten Formteile zwei entgegenwirkende Lippen (2c, 3c) aufweisen welche sich parallel zueinander entlang der Seiten des Rahmens (1) erstrecken und an ihm befestigt sind und dadurch, dass die freien Enden (2d und 3d) dieser Lippen voneinander beabstandet sind mit einer Entfernung, die kleiner als die Abmessung des Querschnitts der Dichtung (4) ist.

2. Filter nach Anspruch 1, **dadurch gekennzeichnet, dass** der besagte Rahmen (1) aus mindestens einem Profil (2, 3) hergestellt ist, welches eine nach innen gerichtete zum Eintreiben des besagten Filterkörpers (7) bestimmte Vertiefung aufweist, und dadurch, dass mindestens eine der besagten Lippen (2c, 3c) durch Biegen eines Flügels (2a, 3b) dieses Profils (2, 3) erhalten wird.

3. Filter nach Anspruch 2, **dadurch gekennzeichnet, dass** der besagte Rahmen (1) aus zwei Profilen (2, 3) mit L-förmigem Querschnitt hergestellt ist, wobei die Flügel (2a, 3a) der Profile, welche dem grossen Schenkel ihres Querschnitts entsprechen, zusammengefasst sind und ihr Flügel (2b, 3b), welcher dem kleinen Schenkel ihres Querschnitts entspricht, sich jeweils in der Ebene der Vorderseiten des Filters erstreckt, wobei eine der besagten Lippen (2c, 3c) durch Biegen eines grossen Flügels (2) der Profile und die andere (3c) durch ein Rückbiegen des kleinen Flügels (3b) des ändern Profils (3) gebildet wird.

## Claims

1. A gas filter, in particular an air filter, able to resist temperatures up to 250°C, including a frame (1), a filter body (7) set into said frame (1) and a braided glass seal (4) secured to the exterior of one front face of the frame by fixing means, **characterized in that** said fixing means include shaped parts in one piece with the frame (1) or fixed to said frame, said shaped parts having two parallel opposed lips (2c, 3c) along sides of the frame (1) and attached thereto, and **in that** the free edges (2d and 3d) of said lips are spaced apart by a distance less than one dimension of the cross section of the seal (4).

2. A filter according to claim 1, **characterized in that** said frame (1) is made from at least one section (2, 3) delimiting a concavity facing inward in which said filter body (7) can be set and **in that** at least one of said lips (2c, 3c) is obtained by bending a flange (2a, 3b) of said section (2, 3).

3. A filter according to claim 2, **characterized in that** said frame (1) is made from two sections (2, 3) having an L-shaped cross section, the flanges (2a, 3a) of the sections corresponding to the larger branch of their cross section being placed in contact and their flanges (2b, 3b) corresponding to the smaller branch of their cross section lying in the planes of the respective front faces of the filter, one of said lips (2c, 3c) being formed by bending a larger flange (2a) of one section (2) and the other (3c) by bending back the smaller flange (3b) of the other section (3).
